(19) **Europäisches Patentamt**
**European Patent Office**
**Office européen des brevets**

(11) **EP 3 671 558 A1**

(12) **EUROPEAN PATENT APPLICATION**

(43) Date of publication:
**24.06.2020 Bulletin 2020/26**

(51) Int Cl.:
**G06K 9/62** (2006.01)      **G06K 9/00** (2006.01)
**G06K 9/46** (2006.01)

(21) Application number: **19185459.5**

(22) Date of filing: **10.07.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.12.2018 GB 201821131**

(71) Applicant: **SITA Information Networking Computing UK Limited**
**Hayes, Middlesex UB3 1BW (GB)**

(72) Inventor: **LIU, Adrian**
**Hayes, Middlesex UB3 1BW (GB)**

(74) Representative: **Bentall, Mark James**
**Reddie & Grose LLP**
**The White Chapel Building**
**10 Whitechapel High Street**
**London E1 8QS (GB)**

(54) **AUTHENTICATION SYSTEM, APPARATUS, AND METHOD THEREFOR**

(57)     Aspects of the invention relate to methods of authenticating a user and user authentication systems. The method comprises classifying an image of the user as authentic or non-authentic by: identifying a separation vector between a user image characteristic vector and a hyperplane generated by a machine learning algorithm; comparing the separation vector with a threshold value; and associating the user image with a classification value if the separation vector exceeds the threshold value. The user may be authenticated based on a classification decision informed by the classification value associated with the user image.

FIG. 1

**Description**

FIELD OF THE INVENTION

This invention relates in general to an image processing and classification system. More particularly, this invention relates to a system, apparatus, method or computer program for detecting an individual such as a customer or passenger, or a device for use by an agent. More particularly, the invention relates to a system for detecting a passenger which may be used by a security agent, an airline agent, or other agent at an airport or other transportation hub such as a railway station, or bus station.

BACKGROUND OF THE INVENTION

Facial recognition and face matching are widely used biometric identification systems which reduce the need for human assessment during the identification process. Compared to other biometric identification systems, such as retina or fingerprint scanning, facial recognition is simple, user-friendly and convenient. However, such known facial recognition systems are susceptible to being deceived by 'spoofing' attacks where a person tricks the system into recognising a different face. This may be achieved using a spoofing technique, for example by using a printed image, digital screen, textile image or mask to show a different face. To counter this, face matching and recognition systems typically use liveness detection measures to assess whether a matched face is 'live' or 'non-live' using indicators such as the face's motion, texture and life signs. However, such systems have numerous drawbacks as discussed below.
One liveness detection measure is motion analysis which assesses how certain features of a face move in relation to each other. When a 3D face is rendered in 2D, central features of the face such as the nose move much more than outer features of the face due to perspective. By contrast, there is no relative movement between the features of a 2D face. However, systems which rely on relative facial motion require high quality video cameras which may be affected by poor ambient light and do not work when the user remains very still. Another liveness detection measure is texture analysis which requires a large and diverse dataset to produce accurate results, often requires additional hardware, such as infrared cameras, and can be spoofed using photographs which contain little texture information. Thermal cameras and infrared sensors may also be used to analyse face temperature and skin response. Finally, liveness detection measures which include analysing life signs such as blinking require additional hardware and may be intrusive to use by requiring users to perform specific gestures or motions at specific times.
Existing systems also have the problems of giving a high false alert rate, use algorithms which are CPU intensive, or require expensive hardware.

SUMMARY OF THE INVENTION

The invention is defined by the independent claims, to which attention is now drawn. Preferable features are laid out in the dependent claims.
According to a first aspect of the invention, there is provided a method of authenticating a user comprising the steps of: identifying a characteristic vector associated with an image of the user; representing the user image characteristic vector in a hyperspace; classifying the user image characteristic vector with one or more data models, wherein for each data model the user image characteristic vector is classified by: identifying a separation vector between the user image characteristic vector and a hyperplane associated with a first data model; comparing the separation vector with a threshold value associated with the hyperplane; and associating the user image with a classification value if the separation vector exceeds the threshold value; and authenticating the user based on a classification decision informed by the classification values.
In an embodiment, the user image characteristic vector is used to authenticate further users.
In another embodiment, the user image characteristic vector is included in one or more of the plurality of data models.
In another embodiment, the threshold value associated with each hyperplane is optimised with an optimisation algorithm to provide an acceptable authentication rate.
In another embodiment, the threshold value associated with each hyperplane is independently adjusted to provide bias towards a particular one of the plurality of data models.
In an embodiment, the method further comprises the step of representing the user image characteristic vector.
In another embodiment, the characteristic vector has a plurality of components and is represented in a hyperspace having a dimension associated with each of the plurality of components.
In another embodiment, the plurality of components includes characteristic RGB values, characteristic HSV values, characteristic convolution values, and characteristic LBP values.
In another embodiment, each of the one or more data models correspond to a different classification value

In another embodiment, if the classification value associated with the user image indicates that the image is authenticated then the steps of identifying a separation vector between the user image characteristic vector and a hyperplane associated with a first data model; comparing the separation vector with a threshold value associated with the hyperplane; and associating the user image with a classification value if the separation vector exceeds the threshold value are repeated for at least one further data model.

In another embodiment, the classification decision indicates whether the user image is a representation of a non-authenticated user imitating an authenticated user based on the one or more classification values.

In another embodiment, a user is permitted to leave a processing area only if the user is authenticated based on the outcome of the classification decision.

In another embodiment, the method is implemented in an airport environment.

In an embodiment, the method further comprises generating the one or more test models by identifying one or more test databases, each of the test databases including a plurality of test images.

In another embodiment, generating the one or more test models further comprises identifying a characteristic vector associated with each of the plurality of test images.

In another embodiment, each test image characteristic vector has a plurality of components, is associated with at least one classification value, and is plotted in a hyperspace having a dimension associated with each of the plurality of components.

In another embodiment, generating the plurality of test models further comprises identifying, from the one or more test databases, a plurality of datasets comprising test images having the same classification value.

In another embodiment, generating the plurality of test models further comprises calculating, for each of the plurality of datasets, at least one hyperplane wherein each hyperplane defines a region in which the characteristic vectors are classified according to a predetermined classification value;

In another embodiment, generating the plurality of test models further comprises establishing a threshold value associated with each hyperplane.

According to a second aspect of the invention, there is provided a computer program product which when executed performs the steps of the first aspect of the invention.

According to a third aspect of the invention, there is provided a user authenticating system comprising processing means configured to: identify a characteristic vector associated with an image of the user; represent the user image characteristic vector in a hyperspace; classify the user image characteristic vector with one or more data models, wherein for each data model the user image characteristic vector is classified by: identifying a separation vector between the user image characteristic vector and a hyperplane associated with a first data model; comparing the separation vector with a threshold value associated with the hyperplane; associating the user image with a classification value if the separation vector exceeds the threshold value; and authenticating the user based on a classification decision informed by the classification values.

DESCRIPTION OF DRAWINGS

Embodiments of the invention will now be described, by way of example only, with reference to the accompanying drawings, in which:

Figure 1 is a schematic diagram of the functional components embodying the invention;
Figure 2 is a flow diagram showing an example method for extracting characteristic features from an image;
Figure 3 is a flow diagram showing an example method of classifying a sample image based on test data;
Figures 4A to 4D show schematic diagrams of a visual representation of classifying a sample image based on test data;
Figure 5 is a flow diagram showing an example method of creating a data model in accordance with embodiments of the invention;
Figure 6 is a schematic diagram showing the test data structure for providing a data model in accordance with embodiments of the invention;
Figure 7 is a schematic flow diagram showing how a sample image may be classified in accordance with embodiments of the invention; and
Figures 8A to 8P show example histograms of characteristic features extracted from an authentic image and from a non-authentic image.

DETAILED DESCRIPTION

The following description is of an authentication system for use in the aviation industry, but this is exemplary and other applications of the invention will also be discussed. For example, the system may be used in any environment where facial recognition technology may be implemented. Thus, embodiments of the invention find application in the security industry in general, as well as in other travel industries, such as rail, coach, car, and in border control in general.

Additionally, the following embodiments described may be implemented using a C++ programming language using for example an OpenCV library. However, this is exemplary and other programming languages known to the skilled person may be used such as JAVA, and .xml.

In the following description, the term spoofing may refer to the process of an individual masquerading as another individual or concealing their identity, for example by hiding their face behind an image of a different user.

The term spoof image may refer to a live or captured image of a user who has deliberately concealed their appearance and/or identity using a spoofing technique such as the use of masks or images on a display screen. In other words, the spoof image is a representation of a non-authenticated user imitating the physical appearance of an authenticated user. By contrast, a live image in the context of this description may refer to a representation of an authenticated user.

The terms authentic user and authenticated user may refer to users who are not attempting to conceal their real appearance and/or identity. In other words, authenticated users are users who the system has determined to be genuine and not attempting to deceive the system.

The term user image may be used to refer to an image of the user captured by the image capture unit 103. In some embodiments, this may be achieved by selecting a still image from a video stream of the user.

The terms decision threshold and threshold value may be used to refer to a parameter used to calculate which decision (i.e. live or spoof) returned by the system, based on a comparison between a calculated score and a threshold value. In one example, if the threshold value is exceeded, the algorithm determines that the image is not genuine and that the image relates to a spoofing attempt. Accordingly, the authentication system may determine that the user is not an authorised user.

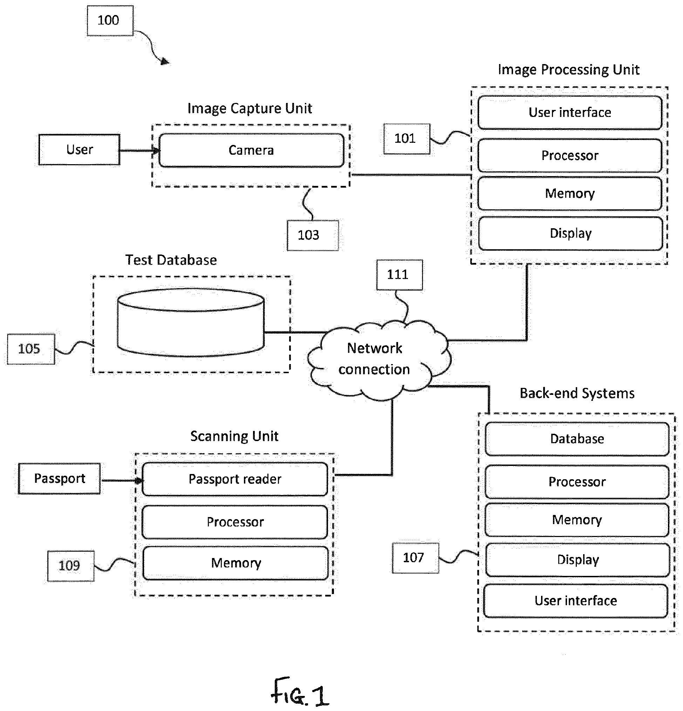

Turning to figure 1, an authentication system 100 may comprise any one or more of an image processing unit 101, an image capture unit 103, a test database 105, a back end system 107 and a scanning unit 109 each interconnected via a network connection 111.

The image capture unit 103 may be configured to capture an image or sequence of images. In one example, a camera, such as a digital camera, may be used to capture the image or sequence of images. Thus, the image capture unit 103 may be configured to capture a sequence of images as a video.

In some embodiments, the image capture unit 103 comprises a video camera and a processor and is operable to capture live images of a user for use during facial recognition and liveness detection procedures. However, it will be appreciated that the system may also operate using recently stored images, whereby the image capture unit 103 further comprises a memory for storing images. The system is therefore applicable to both live image analysis and analysis of previously captured stored images.

The image capture unit 103 is communicatively coupled to the image processing unit 101 to enable images to be sent to the image processing unit 101 for analysis. The image processing unit 101 may be communicatively coupled, via wired or wireless transmission means which will be known to the skilled person, to any one or more different functional components, shown in figure 1 of the drawings.

The image processing unit 101 comprises a processor and usually any one or more of a user interface, a memory and a display. The image processing unit 101 receives images captured by the image capture unit 103 and uses stored algorithms further described below to analyse the images to determine whether an image associated with a user is genuine or fraudulent. The display may show the results of the analysis, or alternatively the results may be communicated with a separate back-end system 107.

The image capture unit 103 and image processing unit 101 may operate independently or form part of an applied border control gate (ABC gate) which may further comprise fingerprint scanners, smartcard readers, barcode readers and printers and so on. Accordingly, as shown in figure 1, the system may further comprise a scanning unit 109 and additional back-end systems 107 such as user verification units. The image processing unit 101, scanning unit 109 and back end systems 107 may be connected by a network connection 111.

In some embodiments, the scanning unit 109 comprises a passport reader, a processor and a memory. The scanning unit 109 is operable to record a user's details such as their travel documents or biometrics. A scanning unit 109 may be included in the system where facial verification is analysed concurrently with liveness detection.

In some embodiments, the back-end systems 107 comprise a database, a processor, a memory, a display and a user interface. The back-end systems 107 may provide access via an internet connection to flight departure systems, baggage handling systems, and face verification systems which provide the system with additional functionality.

In preferred embodiments, the above authentication system 100 is implemented as part of airport identification systems, such as self-service check-in kiosks or immigration gates.

The authentication system 100 described above is advantageously able to analyse images of users and classify those images as either being an authenticated "real" image or a non-authenticated "spoof" image.

This is achieved by analysing three principal characteristics, or features, of the image:

a) Light and colour distribution statistics

Spoof materials, such as printed media or images of faces displayed on a screen, are expected to diffuse light and colour within different ranges compared to real faces. The intensity of colour between each type of spoofing material is also expected to be different. Light and colour variations are expected to be generally present across multiple sources of data containing live and spoof images. Thus, an analysis of the light and colour distribution statistics may enable the system 100 to distinguish between real and spoof facial images.

b) Blur/Sharpness variation

Due to limitations in accurately reproducing an image, such as screen resolution and printer quality, images used during spoofing attempts are inherently blurrier than a real face. Again, if multiple data sources are combined then the blurriness is omnipresent in each of the data sources due to the inherent resolution limitations of image reproduction. Thus, analysing an image to identify whether an image is considered blurry may also enable the system 100 to distinguish between real and spoof facial images.

c) Local Binary Patterns (LBP)

LBP methods are known to be successful for use as a descriptor of texture in an image and for differentiating between real or spoof facial images. LBP values may vary across a plurality of data sources, and so in preferred embodiments less emphasis is placed on the use of LBPs. This may be done, for example, by applying weighting factors to the results of each of the above analyses, with a lower weighting factor being applied to the LBP results. Thus, light, colour and blur/sharpness features may be taken as the main classifying features and LBP values may be included as lower-level classifying features.

Analysing an image for each of the above features provides a plurality of values which may each form a component of a single characteristic vector that is associated with and defines the analysed image. Combining the above features into a single characteristic vector is considered to be unique and advantageously enables a comparison of features across a plurality of data sources.

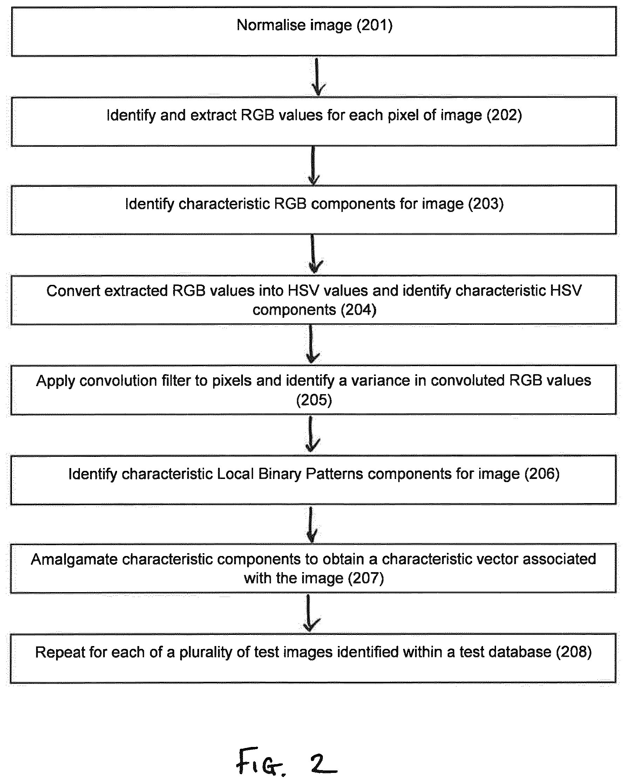

Figure 2 is a flow diagram illustrating examples of a method for performing feature extraction on an image.

In preferred embodiments, steps 201 to 208 are performed by image processing unit 101. In step 201, each image is normalised. This ensures that all images are the same pixel size and that the face in each image is centred in exactly the same way. This advantageously ensures that the features extracted from each image are directly comparable and also allows for quick computation execution.

Firstly, each image is analysed to detect the presence of a face using known techniques. For example, in preferred embodiments face detection is performed using a Haar Cascade method which uses a classifier trained to recognise Haar-like features within an image. One specific example of a Haar Cascade algorithm is cv2.CascadeClassifier('haarcascade_frontalface_default.xml'). This algorithm may be found at http://docs.opencv.org/trunk/d7/d8b/tutorial_py_face_detection.html. The Haar-like features comprise edge features, line features, diagonal line features and centre features.

Once a face is detected, the image is re-sized to ensure a uniform pixel distance between the pupils of the detected eyes. In preferred embodiments, the image is re-sized such that there are 70 pixels between the pupils in each image. Once re-sized, the image is re-orientated using a rotation algorithm to ensure that the eyes are level. Finally, the image is cropped to ensure that each image - and therefore the number of pixels within each image - is uniform. In preferred embodiments, the images are cropped to 120 x 180 pixels with the face centred in the middle of the image using the pixel location of each pupil. For example if the separation between the pupils is 70 pixels then the image will be cropped to leave 25 pixels either side of the pupils, thereby ensuring an image width of 120 pixels.

Image rotation, scaling and cropping may be performed by making use of a pixel coordinate system. Pixel coordinate systems are normally defined as a Cartesian coordinate system with the origin at the top left corner of an image or screen. A specific pixel location (x,y) defines the location from the origin as x pixels to the right of the origin and y pixels below the origin. Alternatively, in other pixel coordinate systems, the origin may be located at the bottom left corner of an image or screen. A specific pixel location (x,y) would in that case define the location from the origin as x pixels to the right of the origin and y pixels above the origin.

Once an image is normalised, the image is analysed to derive characteristic values associated with RGB (red, blue and green) values, HSV (hue, saturation and value) values, convoluted RGB values, and LBP (local binary pattern) values.

This specific set of characteristics advantageously enables the image to be statistically analysed to identify differences between images of an authentic user and images of a non-authentic user, thereby allowing for better detection of spoofing attempts. The characteristics are advantageously diverse enough to be generalizable across datasets while still retaining accuracy, as detailed further below.

RGB values for each pixel in the image are identified and extracted in step 202. A colour value of a pixel may be represented as an indication of the proportion of red, green and blue light that is combined to produce the particular colour. The colour value is typically expressed as an RGB triplet, where each component varies from zero to a predefined maximum. For example, each colour component may vary in value from zero to 255.

After the RGB values are extracted for each pixel in the image, the image processing unit identifies characteristic RGB components for the image in step 203. This may be achieved by identifying the most prevalent colours within the image. In preferred embodiments, this is achieved by providing a histogram table for each R, G and B colour channel. Each R, G and B pixel value is assigned to one of 32 non-overlapping bins of equal width provided for each colour channel. A frequency count is performed to establish which bins are the most populated and to assign values for each bin in each channel. The bin number associated with the most populated bin for each R, G and B colour channel and the bin number associated with the 6 most populated bins across all three colour channels are combined to form 9 characteristic RGB components associated with the image.

In a specific embodiment, the characteristic RGB values colour features for single colour channel (red) may be identified with pseudocode (1):

(1)

```
colour = concatenate(image["RED"])
colour_hist = histogram(colour, bins = 32)
colour_features = names(colour_hist)[1:6, order = 'desc']
```

Next, the image processing unit converts the extracted RGB values into HSV values and identifies characteristic HSV components in step 204. A colour may also be represented as a combination of three parameters: Hue, Saturation and Value (HSV). Representing a colour using HSV values enables the intensity (value) of the image to be considered separately to colour information (hue and saturation). In addition, the use of HSV values is particularly advantageous for use with machine learning algorithms and enables the below statistical information to be obtained.

RGB values may be converted in HSV values using the known mathematical formulae (1) to (3).

(1)

$$V \leftarrow max(R, G, B)$$

(2)

$$S \leftarrow \begin{cases} \dfrac{V - min(R, G, B)}{V} & if(V \neq 0) \\ 0 & otherwise \end{cases}$$

(3)

$$H \leftarrow \begin{cases} 60(G - B)/(V - min(R, G, B)) & if(V = R) \\ 120 + 60(B - R)/(V - min(R, G, B)) & if(V = G) \\ 240 + 60(R - G)/(V - min(R, G, B)) & if(V = B) \end{cases}$$

Where, if H < 0 then H ← H + 360.

Once all RGB pixel values have been converted into HSV pixel values, the system 100 identifies the following known statistical values for each H, S and V channel: mean, standard deviation, skewness and count for the top 10 percent for the values in each H, S and V channel. These 4 values for each of the 3 HSV channels provide 12 characteristic HSV components associated with the image.

In a specific embodiment, the characteristic HSV values are identified with pseudocode (2):

(2)

```
hsv_features = array([mean(h), std(h), skew(h), last(histogram(h, bins
= 10)), mean(s), std(s), skew(s), last(histogram(s, bins = 10)),
mean(v), std(v), skew(v), last(histogram(v, bins = 10))])
```

In step 205, a convolution filter is applied to each pixel and a variance in convoluted RGB pixel values is identified. In preferred embodiments, this is achieved by applying a sharpening kernel to each pixel of the image. Sharpening kernels emphasise differences between adjacent pixel values and so highlight where distinct image features are located. An example of a sharpening kernel is the matrix:

$$\begin{pmatrix} 0 & -1 & 0 \\ -1 & 5 & -1 \\ 0 & -1 & 0 \end{pmatrix}$$

Applying this matrix to each R, G and B colour value associated with a pixel provides a convoluted set of RGB pixel values. The statistical variance of the convoluted RGB values may then be calculated for each R, G and B colour channel. Greater calculated variations correspond to live images. This is because the spoof image is expected to have a relatively low resolution and therefore be slightly blurry. By contrast, the live image will have more clearly defined edges. This level of detail cannot be found in the spoof image, and so the live images will be expected to have a greater spread of values, and accordingly a greater variance than the spoof images.

In a specific embodiment, the variance in pixel values for the red colour channel is calculated using pseudocode (3):

(3)

```
kernel = matrix([0, -1, 0, -1, 5, -1, 0, -1, 0], nrow = 3, ncol =3)
sharp_image = convolve(image["RED"], kernel)
blur_feature = variance(concatenate(sharp_image)))
```

Thus, the calculated variance for each colour channel provides 3 characteristic convolution components associated with the image.

Next, in step 206, characteristic LBP components are identified for the image. Known LBP operators are able to provide labels for each pixel of an image by analysing the 8 neighbouring pixels that surround a central target pixel. Typically a comparison is made between each of the neighbouring pixels and the central pixel which provides a binary output (i.e. smaller than the central pixel value, or greater or equal to the central pixel value). The amalgamated result of all 8 neighbouring pixels provides an output as an 8-bit binary number.

Of the 256 different possible outcomes, 58 correspond to so-called "uniform" binary patterns. An LBP is uniform if the output binary pattern contains at most two bitwise transitions from 0 to 1 or vice versa when the bit pattern is traversed circularly. For example, the following 8-bit binary numbers are considered uniform binary patterns:

00000000 (0 transitions);
11110000 (1 transition);
01110000 and 11001111 (2 transitions)

A histogram for each of the 58 uniform patterns is created and the distribution of pixel values within each of the 58 bins provides an indicator of the texture of the face. Different textures provide different distributions. For example, a spoof facial image that uses textiles may produce more shadows than a real face and so certain LBP values calculated for the spoof image may be under represented compared to the LBP values calculated for a real face.

In a specific embodiment, the characteristic LBP values are identified with pseudocode (4):

(4)

```
grayscale_image = greyscale(image)
lbp = local_binary_pattern(greyscale_image, radius = 1)
lbp_features = histogram(concatenate(lbp), bins = 58)
```

where RGB values can be converted to greyscale with equation (4):

(4)

$$L = R\,\frac{299}{1000} + G\,\frac{587}{1000} + B\,\frac{114}{1000}$$

and where R, G and B are red, green, and blue pixel values having a value between 0 to 255.

Thus, the bin count for each of the 58 uniform binary patterns provides 58 characteristic LBP components associated with the image.

In step 207, each of the characteristic components described above are amalgamated to obtain a characteristic vector associated with the image. Thus, the characteristic vector will comprise 82 characteristic components: 9 characteristic RGB components; 12 characteristic HSV components; 3 characteristic convolution components; and 58 characteristic LBP components.

In preferred embodiments, each test image characteristic vector will also be assigned a classification label identifying at least one classification value corresponding to the known authentication status of the image. For example, a first classification value may be assigned to a test image of a live face and a second classification value may be assigned to a test image that uses a first spoofing technique, such as the use of a textile mask. In preferred embodiments, the classification value is a file name reference which identifies a text descriptor in a look-up table. The text descriptor may be, for example, "live", "spoof - print paper", "spoof - screen", "spoof - passport", and "spoof - textile".

Finally, in step 208, steps 201 to 207 are repeated for each of a plurality of test images identified within a test database. Thus, a characteristic vector is identified for each of the plurality of test images in the test database.

Identifying a characteristic vector for each test image in the test database enables each test image to be represented, or modelled, by the characteristic vector. Generally, if the characteristic vectors include n components, then they may be represented in an *n*-dimensional space. In the example above, the characteristic vectors having 82 characteristic components can be modelled in an 82-dimension hyperspace. In the context of this description, a hyperspace is a space having greater than 3 dimensions. The use of a hyperspace advantageously enables a plurality of features associated with a single image to be represented in a single model.

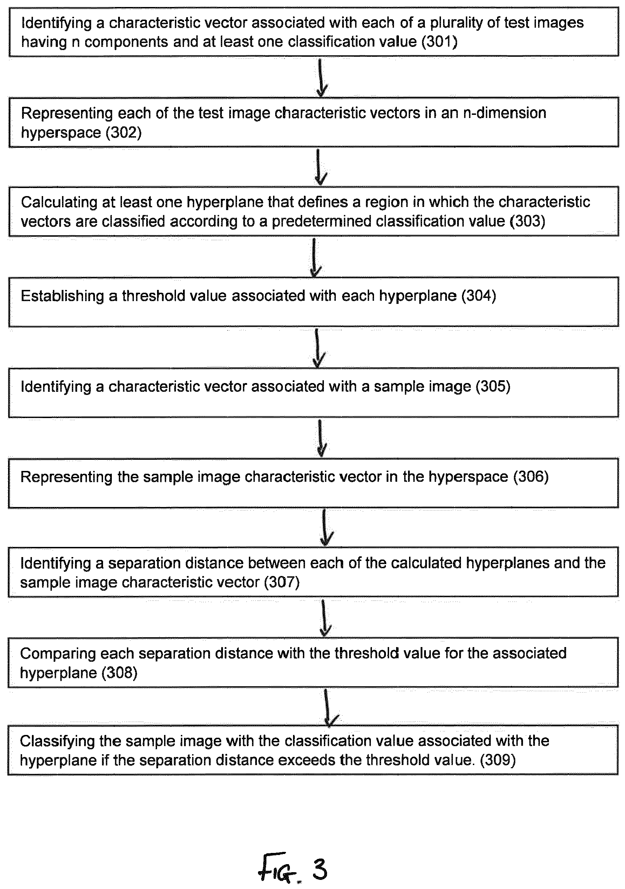

A data model may be used to identify distinct regions corresponding to data having a specific category or classification. The model may therefore be used to classify a new image by representing the new image in the model and establishing the proximity of the new image to one or more of the identified regions, as further described with reference to figure 3 below.

Figure 3 is a flow diagram showing an example, simplified, method of classifying a sample image.

Steps 301 and 302 involve identifying a characteristic vector associated with each of a plurality of test images having n components and at least one classification value and representing each of the test image characteristic vectors in an n-dimension hyperspace. In preferred embodiments, steps 301 and 302 may be performed in accordance with the steps described above in relation to figure 2.

A third step 303 involves calculating at least one hyperplane that defines a region in which the characteristic vectors are classified according to a predetermined classification value. In preferred embodiments, this is achieved using known machine learning algorithms, such as a Support Vector Machine (SVM), to separate the data into categories or classifications. In some embodiments, this may be implemented using a sci-kit learn Python package with a grid search for hyper-parameter selection. In a specific embodiment, an SVM with a polynomial kernel is used. However, in other embodiments alternative algorithms may be used. Examples of alternative machine learning algorithms are: SVMs with a linear kernel; SVMs with a radial kernel; a Generalised Linear Model algorithm; a Random Forest algorithm; an eXtreme Gradient Boosting Tree algorithm; and an eXtreme Gradient Boosting Linear algorithm.

The results shown below in Table 1 are for tests conducted using different machine learning algorithms on a data source comprising 150 images with a 4-fold cross-validation re-sampling method. 75 of the images were live images and 75 were spoof images using a single spoofing technique (a digital screen).

TABLE 1: Accuracy results for different machine learning algorithms on a data source comprising 150 images with a 4-fold cross-validation re-sampling method

| Algorithm | Accuracy |
|---|---|
| SVM (linear kernel) | 0.950 |
| SVM (radial kernel) | 0.981 |
| SVM (polynomial kernel) | **0.988** |
| Generalised Linear Model | 0.875 |
| Random Forest | 0.969 |
| eXtreme Gradient Boosting Tree | 0.981 |
| eXtreme Gradient Boosting Linear | 0.969 |

As may be seen from Table 1, an SVM with a polynomial kernel algorithm produced the most accurate results for this set of data.

As the test images are each associated with a classification value, the SVM separates characteristic vectors having different classification values by generating at least one hyperplane between groups of characteristic vectors having the same classification value. For example, a test image may have a first classification value, which identifies that the image is a "real" image of a user, or a second classification value, which identifies that the image is a spoof image of a user. In this example, the SVM would calculate a hyperplane that divides a set of test images into two categories: spoof or live. The hyperplane is advantageously defined so that the separation between the two classes is maximised. In other words, the separation vector between the hyperplane and the data point nearest to the hyperplane for a particular class (also known as the functional margin) is equal in magnitude for each of the two classes. This ensures that the risk of incorrectly classifying data is minimised.

Accordingly, the hyperplane defines two distinct regions whereby a characteristic vector belongs to a first class if it lies on one side of the hyperplane, and belongs to a second class if it lies on the other side of the hyperplane.

A fourth step 304 involves establishing a threshold value associated with each hyperplane. In preferred embodiments, the threshold value corresponds to a separation vector magnitude and direction from a hyperplane. If a plurality of hyperplanes are created by the machine learning algorithm then a threshold value is established for each hyperplane. The threshold value may be adjusted by a user of the system 100 and determines a cut-off distance for whether a mapped data point is classified as a particular class. If the data point is separated from a hyperplane by a distance greater than the threshold value then the data point is identified as a particular class.

The threshold value may be optimised to yield an acceptable spoof detection rate outcome with an acceptable rate of accuracy while keeping false alerts low. In some embodiments, this is achieved using an optimisation algorithm to obtain an acceptable authentication rate, as further described below.

Table 2 below shows an example set of threshold values and their corresponding accuracy, false alert and detection rates for a particular data set. The example results below were obtained from a combination of 3 data sources containing 293 spoof attack images and 600 live face images using the known technique of bootstrapping. The specific results shown below were obtained using 20 repeat bootstrap re-sampling, where 80% of the bootstrap sampling data was used as test images for training the SVM and the remaining 20% of the sampling data was used as sample values for classification by the trained SVM.

TABLE 2: Exemplary average values of threshold in addition to associated accuracy, false alert rates and spoof detection rates.

| Threshold | Accuracy | False spoof rate | Spoof detection rate |
|---|---|---|---|
| 0.40 | 0.947 | 0.0408 | 0.924 |
| 0.55 | 0.943 | 0.0258 | 0.882 |
| 0.75 | 0.912 | 0.01 | 0.762 |

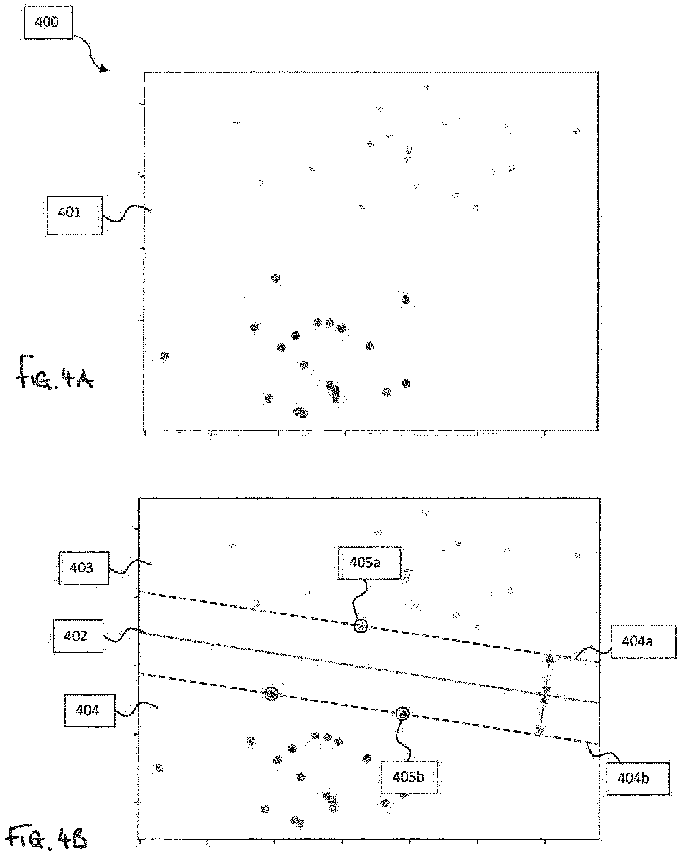

As shown in Table 2, increasing the threshold value advantageously results in the model reducing its false spoof rate. This is because increasing the threshold value increases the certainty that a value exceeding the threshold value will be classified correctly, as may be seen from the below description of Figures 4A to 4D. However, fewer sample values will exceed the threshold value, and so the spoof detection rate and accuracy decrease accordingly.

The specific values shown in Table 2 minimize the false alert rate whilst providing an acceptable detection rate in a production environment. Specifically, a false alert rate of less than 5% may be achieved while having a 90% detection rate for a spoofing attempt while maintaining an accuracy of over 90%.

Once a model has been created for the test image data, subsequent sample images may be classified using the model.

Steps 305 and 306 involve identifying a characteristic vector associated with a sample image and representing the sample image characteristic vector in the hyperspace. As before, in preferred embodiments steps 305 and 306 may be performed in accordance with the steps described above in relation to figure 2.

Steps 307 and 308 involve identifying a separation distance between each of the calculated hyperplanes and the sample image characteristic vector and comparing each separation distance with the threshold value for the associated hyperplane. As indicated above, classifying a new image requires identifying the region in which the characteristic vector of the new sample image is located and whether the characteristic vector is located beyond a cut-off distance from the hyperplane.

A final step 309 involves classifying the sample image with the classification value associated with the hyperplane if the separation distance exceeds the threshold value.

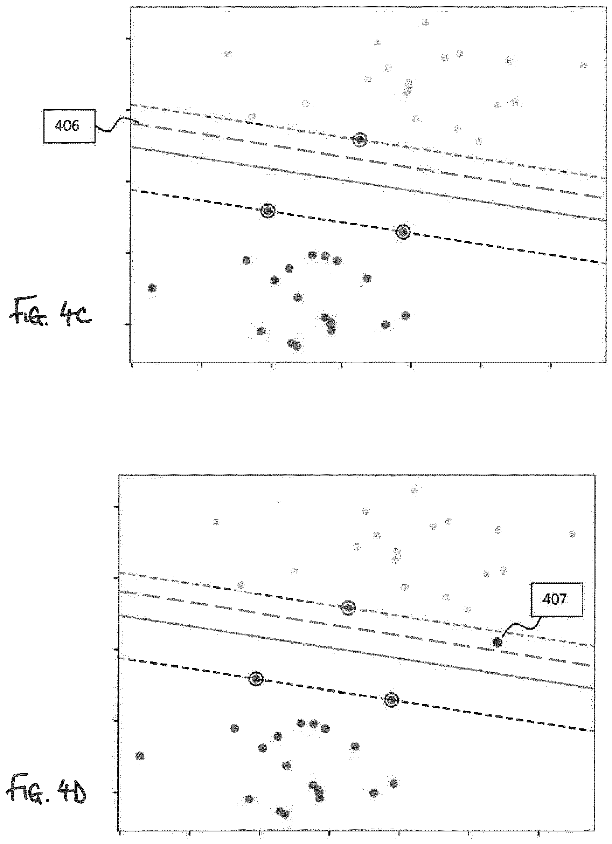

Figures 4A to 4D show an example visual representation of a set of test images as a simple 2-dimension model produced by the machine learning algorithm in order to classify a new characteristic value. The example shown in figure 4 shows how test image characteristic data having two components (x,y) may be modelled in a 2-D space. For example, the representations shown in figures 4 may show the R and G values for a plurality of test images.

In Figure 4A, red colour channel values may be represented on the x-axis and green colour channel values may be represented on the y-axis of model 400. A set of characteristic data 401 associated with a set of test images is represented by the model, each data point having a classification value. In some embodiments, the classification value may indicate whether the image is a real image of a user, or a spoof image of a user.

As indicated above, and shown in Figure 4B, a machine learning algorithm calculates a hyperplane 402 that separates the set of characteristic data 401 into a first region 403 on one side of the hyperplane 402 and a second region 404 on the other side of the hyperplane 402. The first region 403 contains only data points having a first classification value associated with a first class, for example spoof images. The second region 404 contains only data points having a second classification value associated with a second class, for example real images. Thus, in the embodiments described above, the model shown in Figure 4B may classify the test data into real images and spoof images.

The orientation of the hyperplane is calculated using functional margins 404a, 404b. The functional margins 404a and 404b define a maximised equidistant displacement between the hyperplane 402 and the nearest data points 405a, 405b from each region to the hyperplane 402.

In Figure 4C, a threshold value 406 is established for hyperplane 402.

First, a decision function of distance is used to establish a separation from the hyperplane 402 where a data point will be classified with absolute certainty. In preferred embodiments, the separation will be normalised to a distance of +1 on one side of the hyperplane and to a distance of -1 on the other side of the hyperplane. Accordingly, a value of +1 indicates that a data point is most likely to belong in a first class and a value of -1 indicates that a data point is most likely to belong in a second class.

In the example shown in Figure 4C, the functional margins 404a and 404b may be used to represent the normalised separation, where 404a may have a value of +1 and 404b may have a value of -1. However, it will be appreciated that the normalised separation does not have to correspond with the functional margins and may be located at a separation further away from or closer to the hyperplane 402.

Accordingly, the threshold value is a value between zero (i.e. lying on the hyperplane) and +/-1 (i.e. certainly belonging to a classification). In the example shown in Figure 4C, the threshold value is a value between zero and +1, as it lies between hyperplane 402 and margin 404a.

In some embodiments, threshold values can be user-defined. In other embodiments, the threshold value may be optimised to minimize the false spoof rate while maximizing the overall accuracy. This may be achieved using the known technique of Pareto Optimality to find the threshold values which provide the highest accuracy. This has the advantage of easily identifying optimised thresholds for varying environments and business preferences.

For example, if a 1% false spoof rate is desired multiple tests of different threshold values could be run until the possible ranges for threshold values that give false spoof rate of less than 1% are established. The threshold values which provide the highest accuracy which satisfy this criteria may then be selected as the optimum threshold values.

Finally, Figure 4D illustrates representing a new data point 407 associated with a sample image for classification. As shown in Figure 4D, new data point 407 is located within the first region 403 and, additionally, data point 407 is separated from hyperplane 402 by a distance greater than the threshold value. Accordingly, in this example the data point is identified as belonging to the first class, i.e. corresponds to a spoof image.

In real world applications, training images and sample images for classification may not originate from the same data source. For example, images obtained from a first data source at an airport may be compared against test images obtained from a number of data sources from different locations or environments. This variation may result in subtle changes between the images due to different lighting conditions and other environmental factors. Additionally, different data sources may contain a different number of spoofing techniques. For example, a first data source may contain images that make use of spoof techniques involving: screens; paper print; textile print; and passports, while another data source contains only spoofing techniques involving screens and paper print.

These differences between data sources an significantly hinder the performance of the authentication system 100. Thus, liveness detection systems and methods should be able to compensate for the above variations in order to successfully operate using a plurality of new data sources while being trained using a different selection of data sources.

Embodiments of the invention solve the above problems by providing an ensemble model for classifying images. The ensemble model is created by combining a plurality of data models into a single model for classifying a sample image. Embodiments of the invention therefore have the advantage of improving the detection of spoofing attempts by providing a plurality of data models, each of which may detect a spoofing attempt.

This approach is in contrast to known systems and methods, which employ isolated data sources or cross-dataset performance. In this context, cross-dataset performance refers to training a model with one set of data and then testing the model on data from a different source.

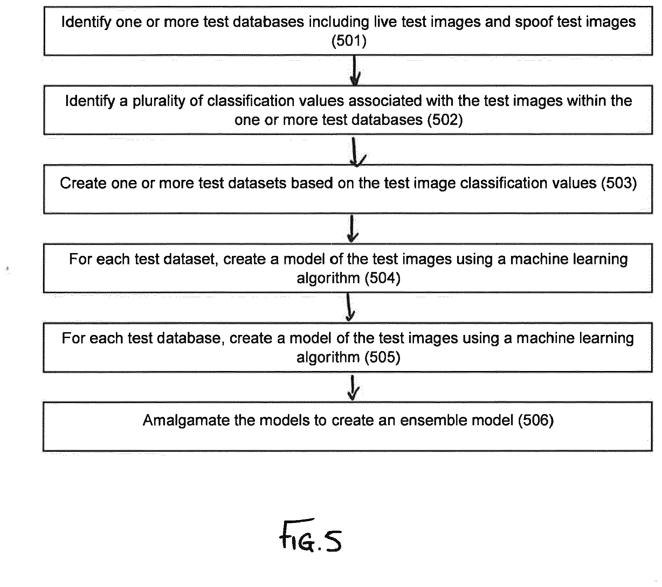

An example method of providing an ensemble model is described below with reference to Figure 5.

In a first step 501 identify one or more test databases including live test images and spoof test images.

In step 502, identify a plurality of classification values associated with the test images within the one or more test databases, as discussed above, each test image will be assigned a classification value, such as whether a test image is a real image or a spoof image. In addition, the classification value may also indicate a specific spoofing technique, such as the use of a screen display or a textile mask.

In step 503, create one or more test datasets based on the test image classification values. Accordingly, if there are a plurality of classification values then a plurality of test datasets will be created. Thus, the test images having the same classification value are grouped into the same test dataset.

In step 504, for each test dataset, create a model of the test images using a machine learning algorithm. Models for each test dataset may be created in accordance with the description above in reference to Figure 3.

In step 505, for each test database, create a model of the test images using a machine learning algorithm as described above in reference to Figure 3. In preferred embodiments, test images are associated with a source database using a database identifier associated with a classification value.

In step 506, amalgamate the models to create an ensemble model.

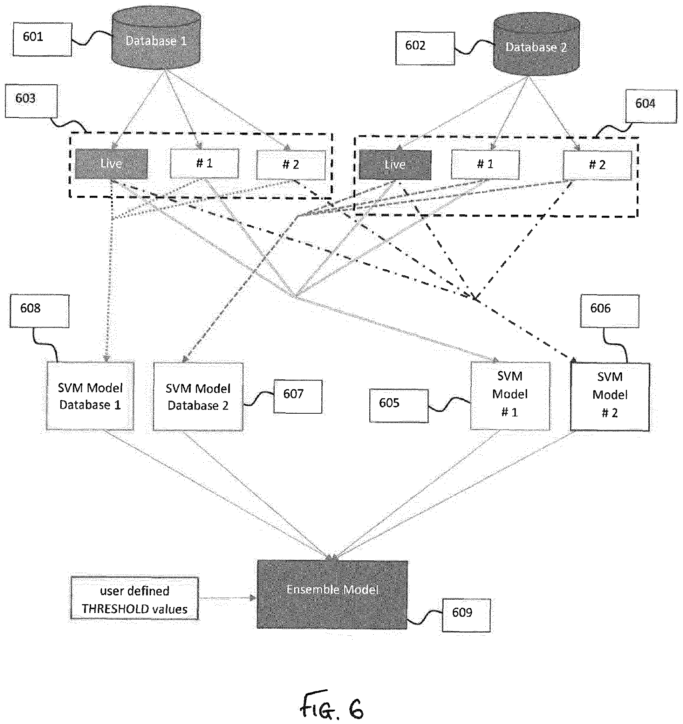

Figure 6 illustrates how an ensemble model may be produced for two different databases, each including test images that are real images and including test images that are spoof images which make use of two different spoofing techniques.

As described above, a plurality of classification values are identified for each test database. As shown in Figure 6, Database1 601 and Database2 602 both include test images having three different classification values 603, 604 shown as "live" "#1" and "#2". In this example, "live" denotes a classification value that indicates the test image is a real image, "#1" denotes a classification value that indicates the test image is a spoof image using a first spoofing technique, and "#2" denotes a classification value that indicates the test image is a spoof image using a second spoofing technique.

Next, one or more datasets are created based on the test classification values. A data model is then created for the one or more datasets using a machine learning algorithm as described above. In preferred embodiments, the one or more datasets are created by combining real images from each database with images associated with each different spoofing technique. In the example shown in Figure 6, a first dataset is produced by combining both sets of live images with both sets of images associated with a first spoofing technique. A machine learning algorithm is used to create a first data model "SVM Model #1" 605 based on the first dataset, as described above. A second data model "SVM Model #2" 606 is created in the same way from a second dataset which combines live images with spoof images associated with a second spoofing technique. Thus, a data model is produced for each identified spoofing technique. In the example shown in Figure 6, two different data models are produced for spoofing techniques "#1" and "#2".

In addition, a data model is created for the test images included in each of the data source using a machine learning algorithm. As shown in Figure 6, a third data model "SVM Model Database1" 607 is created from the test data included in Database1 601 and a fourth data model "SVM Model Database2" 608 is created from the test data included in Database2 602. Thus, a data model is produced for each identified test database. In the example shown in Figure 6, two different data models are produced for each data source "Database1" and "Database2".

Finally, all the generated data models are combined to form an ensemble model 609. As before, the functional margins associated with each hyperplane of each data model are all normalised using a decision function of distance between the hyperplanes for each model. In some embodiments, the data models may be combined into a single amalgamated data model. However, in preferred embodiments the data models are kept separate and are cycled through in order to establish whether a user is authenticated or not. Keeping the data models separate advantageously enables the ensemble model to function effectively where different data classifications or sub-classifications are close or have a significant degree of overlap between them. In this case, for example where different spoofing techniques are present in the data, an amalgamated model would struggle to distinguish each classification, for example the different spoofing techniques, thereby producing significantly worse results.

The table below shows a comparison between the use of a single data model and the combination of one or more data models into an ensemble model. In the results below, the threshold values were configured to keep the False Spoof Rate near 1% for a dataset where 85% of the spoof images originated from the same data source. This is expected to be typical for known real-world applications such as being deployed in an airport environment. As above, the results in Table 3 below were obtained using the known technique of bootstrapping to produce average values for accuracy and spoof detection rate while keeping the false spoof rate around 1%.

TABLE 3: results for each data model where false spoof rate is kept around 1%.

| Model | Accuracy | False spoof rate | Spoof detection rate |
|---|---|---|---|
| **Single model** | 0.848 | 0.0115 | 0.581 |
| **Ensemble model 1** | 0.890 | 0.00979 | 0.699 |
| **Ensemble model 2** | 0.929 | 0.00865 | 0.809 |

In Table 3, "Ensemble model 1" includes a data model for each spoofing technique, and "Ensemble model 2" uses a data model for each spoofing technique as well as a data model for each dataset, as described above in relation to Figure 6.

As can be seen from the above, improved results were obtained when using either ensemble model and the best results derived from combining data models relating to each classification value and relating to each data source.

Thus, the ensemble model includes a plurality of hyperplanes which define groups or classes of test image characteristic vectors. As indicated above, each hyperplane has an associated threshold value. Each threshold value may be adjusted independently of each other, thereby advantageously providing leniency in the ensemble model. This leniency advantageously enables the ensemble model to be adjusted to be weighted towards or away from a particular data model. For example, the threshold values for the data model that is most similar to the present ambient conditions may be set at lower level than the threshold values for the remaining data models in the ensemble model. This is because spoof images are expected to be most easily identified by the data model associated either with the largest dataset or the dataset that is most similar to the present sampling environment. In this way, the false spoof rate can advantageously be reduced.

In some embodiments, the threshold values may be set manually by the user. In other embodiments, an optimization algorithm such as gradient descent may be used to determine an optimum threshold value.

Once the ensemble model is created, sample images can be classified into one or more classes within the ensemble model, as defined by the hyperplanes of each model.

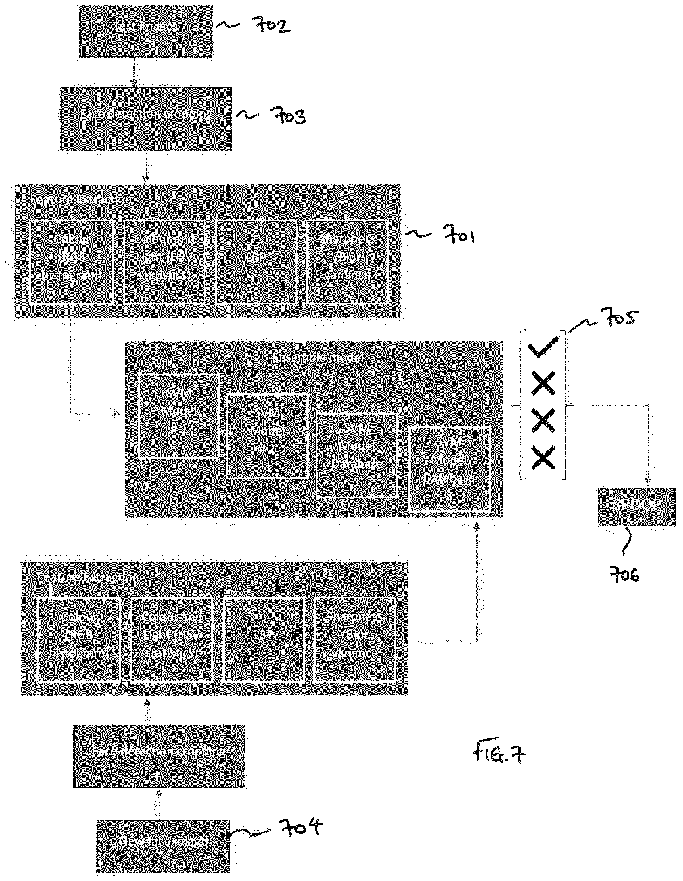

As shown in Figure 7, an ensemble model 701 is created. As described above, this is achieved by cropping test images 702 and performing feature extraction 703 on the test images to produce a plurality of test image characteristic vectors. The ensemble model 701 is produced based on the test image characteristic vectors, as described above with reference to Figures 5 and 6. The ensemble model of Figure 7 comprises the same four data models as Figure 6, namely "SVM Model #1", "SVM Model #2", "SVM Model Database1" and "SVM Model Database2".

A new sample image 704 is obtained. In the same way as the test images, the sample image is cropped and undergoes feature extraction to produce a sample image characteristic vector.

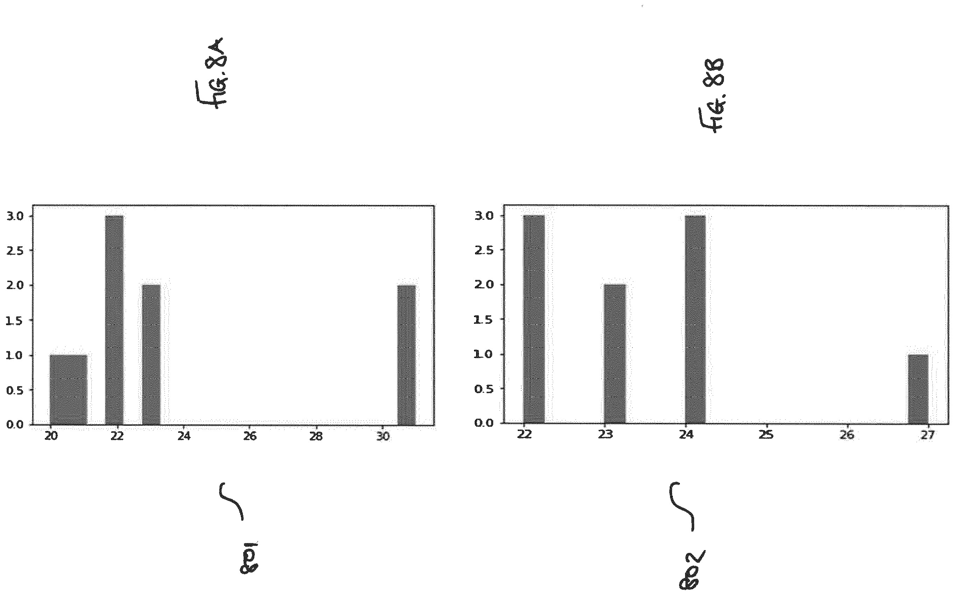

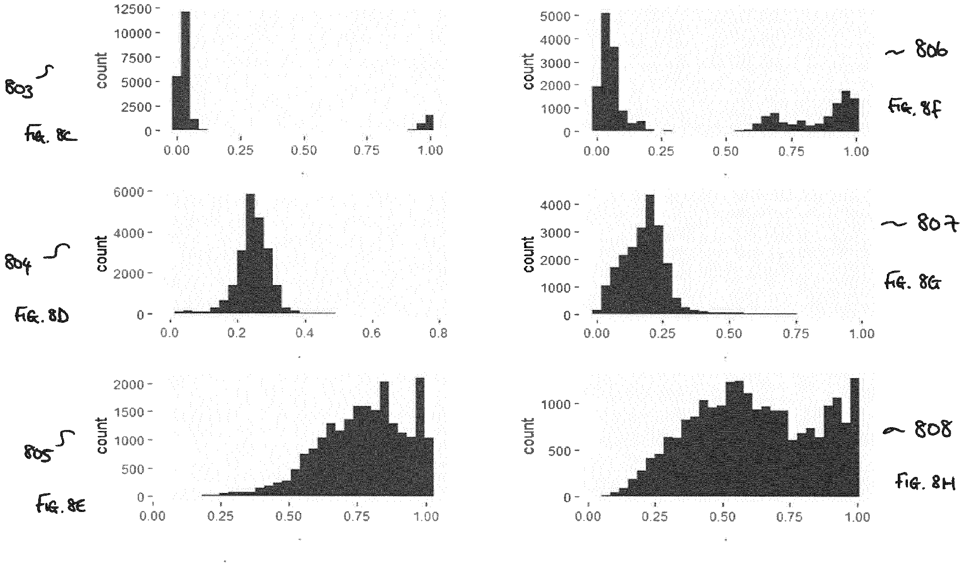

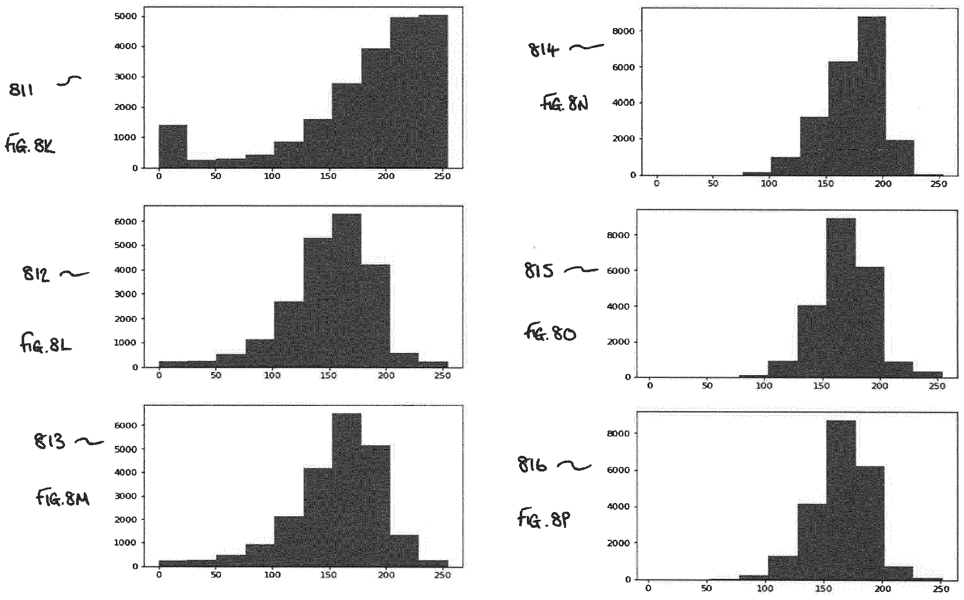

Figures 8A to 8P illustrate example histograms produced during the feature extraction process described above for two different example sample images. In this example, a first sample image is authentic and a second sample image is non-authentic, i.e. corresponds to a spoofing attempt.

Figures 8A and 8B illustrate histograms of extracted RGB values for a single colour channel, for example the red channel, for the authentic image and the non-authentic, spoof, image. Histogram 801 shows the bin populations for the example authentic image for a subset of the 32 different bins, as described above. Histogram 802 shows the bin populations for the example spoof image.

Figures 8C to 8H illustrate histograms of calculated HSV values derived from the extracted RGB values for the authentic image and the spoof image. Histograms 803 to 805 show HSV values extracted from the first example sample image (i.e. the authentic image) whereas histograms 806 to 808 show HSV values extracted from the second example sample image (i.e. the spoof image). Histograms 803 and 806 show the distribution of H-channel values for the authentic and spoof images respectively, histograms 804 and 807 show the distribution of S-channel values for the authentic and spoof images respectively, and histograms 805 and 808 show the distribution of V-channel values for the authentic and spoof images respectively.

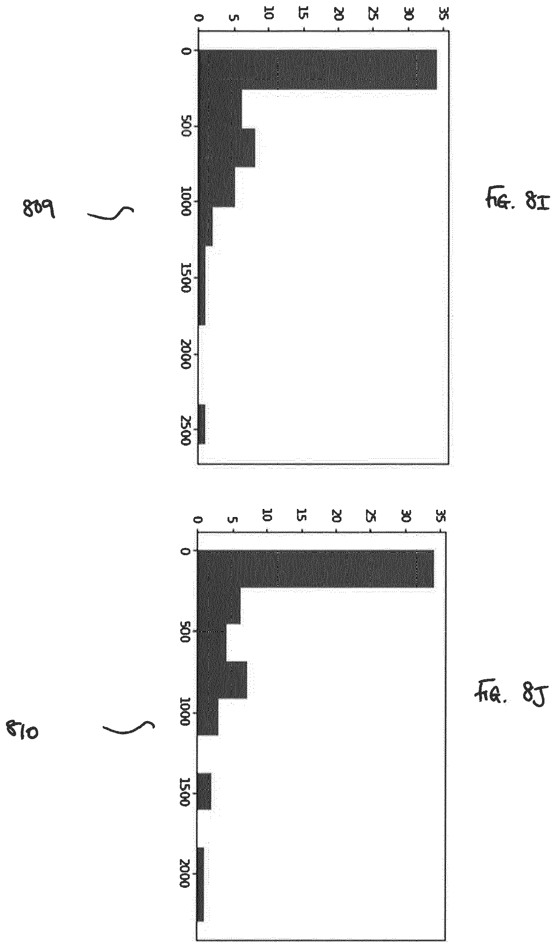

Figures 8I and 8J illustrate histograms of LBP values for the authentic image and the spoof image. Histogram 809 shows the distribution of LBP values for the authentic image whereas histogram 810 shows the distribution of LBP values for the spoof image.

Finally, figures 8K to 8P illustrate histograms of convoluted RGB values where a sharpness filter has been applied to the extracted RGB values, as described above. Histograms 811 to 813 show convoluted RGB values extracted from the authentic image whereas histograms 814 to 816 show convoluted RGB values extracted from the spoof image. Histograms 811 and 814 show the distribution of convoluted R-channel values for the authentic and spoof images respectively, histograms 812 and 815 show the distribution of convoluted G-channel values for the authentic and spoof images respectively, and histograms 813 and 816 show the distribution of convoluted B-channel values for the authentic and spoof images respectively.

As described above, the histograms may be used to generate a first characteristic vector associated with the first sample image and a second characteristic vector associated with the second sample image.

The ensemble model 701 is used to determine whether the sample images, such as the first and second sample images described above, depict a real user or a spoofing attempt by mapping the sample image characteristic vectors according to each constituent data model in turn. For example, the ensemble model 701 of Figure 7 may map the sample image characteristic vectors firstly according to the SVM Model #1 to determine whether the sample image is classified as a real image or as a spoof image where a spoof technique corresponding to "#1" is employed.

Each data model provides an output 705 which informs a classification decision 706. If the first data model classifies the sample image as a real image then the process is repeated for a further constituent data model of the ensemble model. If any of the data model outputs 705 indicate that the sample image characteristic vector is classified as a spoof image then the image is flagged as a spoofing attempt by classification decision 706. As may be seen from Figure 7, one output of the four data models classifies the sample image as a spoof image. Accordingly, the classification decision 706 indicates that the sample image relates to a spoofing attempt and that a user is not authenticated. Alternatively, for example in the case of the first example sample image above, the classification decision may indicate that a user is determined to be authentic.

In preferred embodiments, the process stops if any data model classifies that the user image as a spoofing attempt. This has the advantage of saving processing power, since the algorithm may be stopped without performing every method step. In addition, a new sample image of a different user may then be processed more quickly.

In preferred embodiments, the characteristic vector of each sample image is retained as historical data once it has been classified, thereby improving the accuracy of the ensemble model for use with further sample images. The historical data may be stored in an existing data source, or in a new data source. Therefore, the historic sample value characteristic vector is included in one or more data models used for a further sample value. This has the advantage that the more sample images that the ensemble model analyses and classifies, the more efficient the ensemble model becomes. In other words, the statistics associated with the sample image are used as feedback to further improve how the ensemble model is trained.

Additionally, the sample image may be retained but in preferred embodiments the sample image is deleted to advantageously reduce the data storage requirements of the ensemble model.

In preferred embodiments, the above systems and methods form part of an applied border control gate (ABC gate). Other airport identification systems may include self-service check-in kiosks or immigration gates. In such applications that require controlled access, such as airport immigration, determining that a passenger is 'live' - or authenticated - allows the system to release the passenger from a processing area. However, if the system detects a spoofing attempt - i.e. the user image is not authenticated - an alert may be sent to a supervising immigration officer while retaining the user within a processing area. A moveable gate may be used to selectively retain a user within a particular area based on whether the image processing unit determines that the user is authentic or not.

From the above description, it will be appreciated that features of the above invention may be implemented as part of airport identification systems including, but not limited to, self-service check-in kiosks or immigration gates. It will also be appreciated that the image processing device may include a computing device, such as a desktop computer, a laptop computer, a tablet computer, a personal digital assistant, a mobile telephone, or a smartphone.

The device may comprise a computer processor running one or more server processes for communicating with client devices. The server processes comprise computer readable program instructions for carrying out the operations of the present invention. The computer readable program instructions may be or source code or object code written in or in any combination of suitable programming languages including procedural programming languages such as C, object orientated programming languages such as C#, C++, Java, scripting languages, assembly languages, machine code instructions, instruction-set-architecture (ISA) instructions, and state-setting data.

The wired or wireless communication networks described above may be public, private, wired or wireless network. The communications network may include one or more of a local area network (LAN), a wide area network (WAN), the Internet, a mobile telephony communication system, or a satellite communication system. The communications network may comprise any suitable infrastructure, including copper cables, optical cables or fibres, routers, firewalls, switches, gateway computers and edge servers.

The system described above may comprise a Graphical User Interface. Embodiments of the invention may include an on-screen graphical user interface. The user interface may be provided, for example, in the form of a widget embedded in a web site, as an application for a device, or on a dedicated landing web page. Computer readable program instructions for implementing the graphical user interface may be downloaded to the client device from a computer readable storage medium via a network, for example, the Internet, a local area network (LAN), a wide area network (WAN) and/or a wireless network. The instructions may be stored in a computer readable storage medium within the client device.

As will be appreciated by one of skill in the art, the invention described herein may be embodied in whole or in part as a method, a data processing system, or a computer program product including computer readable instructions. Accordingly, the invention may take the form of an entirely hardware embodiment or an embodiment combining software, hardware and any other suitable approach or apparatus.

The computer readable program instructions may be stored on a non-transitory, tangible computer readable medium. The computer readable storage medium may include one or more of an electronic storage device, a magnetic storage device, an optical storage device, an electromagnetic storage device, a semiconductor storage device, a portable computer disk, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk.

Exemplary embodiments of the invention may be implemented as a circuit board which may include a CPU, a bus, RAM, flash memory, one or more ports for operation of connected I/O apparatus such as printers, display, keypads, sensors and cameras, ROM, a communications sub-system such as a modem, and communications media.

**Claims**

1. A method of authenticating a user comprising the steps of:

   a. identifying a characteristic vector associated with an image of the user;
   b. classifying the user image characteristic vector with one or more data models, wherein for each data model the user image characteristic vector is classified by:

      i. identifying a separation vector between the user image characteristic vector and a hyperplane associated with a first data model;
      ii. comparing the separation vector with a threshold value associated with the hyperplane;
      iii. associating the user image with a classification value if the separation vector exceeds the threshold value; and

   c. authenticating the user based on a classification decision informed by the classification values.

2. The method of claim 1, wherein the user image characteristic vector is used to authenticate further users.

3. The method of claim 2, wherein the user image characteristic vector is included in the one or more data models.

4. The method of claim 1, further comprising the step of optimising the threshold value associated with each hyperplane with an optimisation algorithm to provide an acceptable authentication rate and/or independently adjusting the threshold value associated with each hyperplane to provide bias towards a particular one of the plurality of data models.

5. The method of claim 1, further comprising the step of representing the user image characteristic vector and/or wherein the characteristic vector has a plurality of components and is represented in a hyperspace having a dimension associated with each of the plurality of components and preferably, wherein the plurality of components includes characteristic RGB values, characteristic HSV values, characteristic convolution values, and characteristic LBP values.

6. The method of claim 1, wherein each of the one or more data models correspond to a different classification value and/or wherein if the classification value associated with the user image indicates that the image is authenticated then steps i. to iii. are repeated for at least one further data model and/or wherein the classification decision indicates whether the user image is a representation of a non-authenticated user imitating an authenticated user based on the one or more classification values and preferably wherein a user is permitted to leave a processing area only if the user is authenticated based on the outcome of the classification decision.

7. The method of claim 1, wherein the method is implemented in an airport environment and/or further comprises generating the one or more test models by identifying one or more test databases, each of the test databases including a plurality of test images and preferably wherein generating the one or more test models further comprises identifying a characteristic vector associated with each of the plurality of test images and preferably wherein each test image characteristic vector has a plurality of components, is associated with at least one classification value, and is plotted in a hyperspace having a dimension associated with each of the plurality of components.

8. The method of claim 7, wherein generating the plurality of test models further comprises identifying, from the one or more test databases, a plurality of datasets comprising test images having the same classification value and preferably wherein generating the plurality of test models further comprises calculating, for each of the plurality of datasets, at least one hyperplane wherein each hyperplane defines a region in which the characteristic vectors are classified according to a predetermined classification value and preferably wherein generating the plurality of test models further comprises establishing a threshold value associated with each hyperplane.

9. A computer program product which when executed performs the method of any one of claims 1 to 8.

10. A user authenticating system comprising processing means configured to:

   a. identify a characteristic vector associated with an image of the user;
   b. classify the user image characteristic vector with one or more data models, wherein for each data model the user image characteristic vector is classified by:

      i. identifying a separation vector between the user image characteristic vector and a hyperplane associated with a first data model;
      ii. comparing the separation vector with a threshold value associated with the hyperplane;
      iii. associating the user image with a classification value if the separation vector exceeds the threshold value; and

   c. Authenticating the user based on a classification decision informed by the classification values.

11. The system of claim 10, wherein the user image characteristic vector is used to authenticate further users.

12. The system of claim 11, wherein the one or more data models includes the user image characteristic vector.

13. The system of claim 10, wherein the threshold value associated with each hyperplane is optimised with an optimisation algorithm to provide an acceptable authentication rate and/or wherein the threshold value associated with each hyperplane is independently adjusted to provide bias towards a particular one of the plurality of data models.

14. The system of claim 10, wherein the user image characteristic vector is represented and/or wherein the characteristic vector has a plurality of components and is represented in a hyperspace having a dimension associated with each of the plurality of components and preferably, wherein the plurality of components includes characteristic RGB values, characteristic HSV values, characteristic convolution values, and characteristic LBP values.

15. The system of claim 10, wherein each of the one or more data models correspond to a different classification value and/or wherein if the classification value associated with the user image indicates that the image is authenticated then the system is further configured to repeat steps i. to iii. for at least one further data model and/or wherein the classification decision indicates whether the user image is a representation of a non-authenticated user imitating an authenticated user based on the one or more classification values and preferably wherein a user is permitted to leave a processing area only if the user is authenticated based on the outcome of the classification decision.

16. The system of claim 10, wherein the system is implemented in an airport environment and/or is further configured to generate the one or more test models by identifying one or more test databases, each of the test databases including a plurality of test images and preferably wherein the system is configured to generate the one or more test models by identifying a characteristic vector associated with each of the plurality of test images and preferably wherein each test image characteristic vector has a plurality of components, is associated with at least one classification value, and is plotted in a hyperspace having a dimension associated with each of the plurality of components.

17. The system of claim 16, wherein the system is further configured to generate the plurality of test models by identifying, from the one or more test databases, a plurality of datasets comprising test images having the same classification value and preferably the system is further configured to generate the plurality of test models by calculating, for each of the plurality of datasets, at least one hyperplane wherein each hyperplane defines a region in which the characteristic vectors are classified according to a predetermined classification value and preferably the system is further configured to generate the plurality of test models by establishing a threshold value associated with each hyperplane.

FIG. 1

Normalise image (201)

Identify and extract RGB values for each pixel of image (202)

Identify characteristic RGB components for image (203)

Convert extracted RGB values into HSV values and identify characteristic HSV components (204)

Apply convolution filter to pixels and identify a variance in convoluted RGB values (205)

Identify characteristic Local Binary Patterns components for image (206)

Amalgamate characteristic components to obtain a characteristic vector associated with the image (207)

Repeat for each of a plurality of test images identified within a test database (208)

FIG. 2

Identifying a characteristic vector associated with each of a plurality of test images having n components and at least one classification value (301)

Representing each of the test image characteristic vectors in an n-dimension hyperspace (302)

Calculating at least one hyperplane that defines a region in which the characteristic vectors are classified according to a predetermined classification value (303)

Establishing a threshold value associated with each hyperplane (304)

Identifying a characteristic vector associated with a sample image (305)

Representing the sample image characteristic vector in the hyperspace (306)

Identifying a separation distance between each of the calculated hyperplanes and the sample image characteristic vector (307)

Comparing each separation distance with the threshold value for the associated hyperplane (308)

Classifying the sample image with the classification value associated with the hyperplane if the separation distance exceeds the threshold value. (309)

FIG. 3

400

401

FIG. 4A

403

402

404

405a

404a

405b

404b

FIG. 4B

FIG. 4C

FIG. 4D

Identify one or more test databases including live test images and spoof test images (501)

↓

Identify a plurality of classification values associated with the test images within the one or more test databases (502)

↓

Create one or more test datasets based on the test image classification values (503)

↓

For each test dataset, create a model of the test images using a machine learning algorithm (504)

↓

For each test database, create a model of the test images using a machine learning algorithm (505)

↓

Amalgamate the models to create an ensemble model (506)

FIG. 5

601 — Database 1
602 — Database 2
603
604
Live   # 1   # 2
Live   # 1   # 2
608
606
SVM Model
Database 1
SVM Model
Database 2 — 607
605 — SVM
Model
# 1
SVM
Model
# 2
user defined
THRESHOLD values
Ensemble Model — 609

FIG. 6

Test images ~ 702

Face detection cropping ~ 703

Feature Extraction

| Colour (RGB histogram) | Colour and Light (HSV statistics) | LBP | Sharpness /Blur variance |

~ 701

Ensemble model

SVM Model # 1

SVM Model # 2

SVM Model Database 1

SVM Model Database 2

~ 705

✓
✗
✗
✗

SPOOF

706

Feature Extraction

| Colour (RGB histogram) | Colour and Light (HSV statistics) | LBP | Sharpness /Blur variance |

Face detection cropping

New face image ~ 704

FIG. 7

FIG. 8A

FIG. 8B

FIG. 8C

FIG. 8D

FIG. 8E

FIG. 8F

FIG. 8G

FIG. 8H

FIG. 8I

809

FIG. 8J

810

FIG. 8K 811

FIG. 8L 812

FIG. 8M 813

FIG. 8N 814

FIG. 8O 815

FIG. 8P 816

Europäisches Patentamt
European Patent Office
Office européen des brevets

## EUROPEAN SEARCH REPORT

Application Number

EP 19 18 5459

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WEN DI ET AL: "Face Spoof Detection With Image Distortion Analysis", IEEE TRANSACTIONS ON INFORMATION FORENSICS AND SECURITY, IEEE, PISCATAWAY, NJ, US, vol. 10, no. 4, April 2015 (2015-04), pages 746-761, XP011575418, ISSN: 1556-6013, DOI: 10.1109/TIFS.2015.2400395 [retrieved on 2015-03-12] | 1-3, 5-12, 14-17 | INV. G06K9/62 G06K9/00 G06K9/46 |
| Y | * the whole document * | 4,13 | |
| Y | HUALONG YU ET AL: "Support vector machine-based optimized decision threshold adjustment strategy for classifying imbalanced data", KNOWLEDGE-BASED SYSTEMS, vol. 76, 13 December 2014 (2014-12-13), pages 67-78, XP055658161, AMSTERDAM, NL ISSN: 0950-7051, DOI: 10.1016/j.knosys.2014.12.007 * abstract * * Sect. 4 * | 4,13 | |
| X | US 2017/154209 A1 (NAKANO SHUNSUKE [JP] ET AL) 1 June 2017 (2017-06-01) * paragraphs [0027] - [0060] * * figures 1-6D * | 1,9,10 | TECHNICAL FIELDS SEARCHED (IPC) G06K |
| A | CORTES C ET AL: "SUPPORT-VECTOR NETWORKS", MACHINE LEARNING, KLUWER ACADEMIC PUBLISHERS, BOSTON, US, vol. 20, no. 3, September 1995 (1995-09), pages 273-297, XP000569418, ISSN: 0885-6125 * pages 273-276 * | 1-17 | |

The present search report has been drawn up for all claims

| Place of search | Date of completion of the search | Examiner |
|---|---|---|
| The Hague | 15 January 2020 | Hermes, Lothar |

## ANNEX TO THE EUROPEAN SEARCH REPORT
## ON EUROPEAN PATENT APPLICATION NO.

EP 19 18 5459

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2020

| Patent document cited in search report | Publication date | Patent family member(s) | Publication date |
|---|---|---|---|
| US 2017154209 A1 | 01-06-2017 | JP 2017102671 A<br>US 2017154209 A1 | 08-06-2017<br>01-06-2017 |

EPO FORM P0459

For more details about this annex : see Official Journal of the European Patent Office, No. 12/82